# FASCICULE DE BREVET EUROPEEN

(11) **EP 4 301 629 B1**
(45) Date de publication et mention de la délivrance du brevet: **13.11.2024**
(21) Numéro de dépôt: 22706078.7
(22) Date de dépôt: 01.02.2022
(51) Int. Cl.: B60R 19/34, B60R 19/24

(54) **PLATINE D'INTERFACE DE RENFORT DE PARE-CHOCS POUR VÉHICULE AUTOMOBILE**
STOSSFÄNGERVERSTÄRKUNGSSCHNITTSTELLENHALTERUNG FÜR EIN KRAFTFAHRZEUG
BUMPER REINFORCEMENT INTERFACE FIXTURE FOR A MOTOR VEHICLE

(30) Priorité: 02.03.2021 FR 2102007
(43) Date de publication de la demande: 10.01.2024
(73) Titulaire: Stellantis Auto SAS, 78300 Poissy (FR)
(72) Inventeur: ROYER, Guillaume, 91680 BRUYERES LE CHATEL (FR); PERON, Rodolphe, 95220 HERBLAY (FR); LAIR, Renaud, 75015 PARIS (FR)
(86) Numéro de dépôt international: PCT/FR2022/050182
(87) Numéro de publication internationale: WO 2022/184987

(56) Documents cités:
- CN-A- 111 731 213
- CN-U- 203 601 193
- CN-U- 204 249 968
- CN-U- 207 309 269
- CN-U- 208 306 575
- CN-U- 208 789 626
- CN-U- 209 757 026
- DE-A1- 102019 119 376
- DE-B3- 102005 021 663
- FR-A1- 2 842 152

## Description

### [Domaine technique]

La présente invention concerne d'une manière générale les renforts de pare-chocs pour véhicules automobiles. Elle vise en particulier les platines d'interface de ces renforts de pare-chocs destinées à permettre leur fixation aux extrémités avant des brancards avant ou des prolonges de berceau de la structure d'un véhicule automobile.

### [Technique antérieure]

Dans le cadre de la sécurité passive qui a trait à l'ensemble des moyens et des actions mises en oeuvre pour diminuer les conséquences d'un accident, la face avant des véhicules doit satisfaire à une réglementation très stricte en cas de chocs frontaux visant à assurer la protection des occupants du véhicule tout en limitant l'agressivité de ce véhicule vis-à-vis des autres usagers de la route et notamment des piétons afin de réduire les risques de blessures graves au niveau des jambes de ces piétons.

Les constructeurs automobiles doivent également tenir compte d'autres préoccupations telles que les exigences de style et la maîtrise des coûts de réparation du véhicule lors de chocs à faible vitesse.

Pour répondre favorablement à l'ensemble de ces contraintes, les véhicules automobiles sont équipés en partie avant de renforts de pare-chocs voie haute et voie basse.

Désignés également couramment par l'acronyme SAS (pour « Système d'Absorption de Chocs »), ces renforts de pare-chocs comportent classiquement une poutre métallique creuse s'étendant transversalement ainsi que deux absorbeurs latéraux métalliques solidaires chacun d'une portion d'extrémité latérale correspondante de la poutre et destinés à être fixées soit aux extrémités avant des brancards avant (pour les renforts de pare-chocs voie haute) soit aux extrémités avant des prolonges de berceau (pour les renforts de pare-chocs voie basse).

Les absorbeurs latéraux (désignés couramment sous leur dénomination anglaise « crashboxes » sont conçus pour pouvoir se déformer en formant des plis à la manière d'un accordéon de sorte à dissiper tout ou partie de l'énergie du choc entre le véhicule et un élément qui lui est externe.

Ce type de déformation est également couramment désigné « bottelage » dans la mesure où les profilés prennent une forme annelée après déformation qui ressemble à des bottes de foin liées.

Lors d'un choc à grande vitesse, la structure de caisse est mise beaucoup plus à contribution, et l'effort issu du choc transite via les brancards et/ou les prolonges de berceau afin d'être réparti au travers d'un nombre de pièces de structure bien plus important. Il existe à cet effet des voies distinctes d'effort qui s'étendent de l'avant vers l'arrière du véhicule.

La liaison entre chaque absorbeur latéral d'un renfort de pare-chocs et le brancard ou la prolonge de berceau lui étant associé est réalisée aux moyens de deux platines d'interface de forme rectangulaire liées rigidement (par exemple, par l'intermédiaire d'un cordon de soudure) respectivement à l'extrémité arrière de cet absorbeur et à l'extrémité avant du brancard ou de la prolonge de berceau.

Ces platines d'interface sont en outre pourvues d'orifices ménagés aux niveaux de leurs coins, de sorte à permettre leur fixation deux à deux par boulonnage.

Afin de faciliter les opérations de boulonnage de ces platines lors d'un montage d'un renfort de pare-chocs aux extrémités avant des brancards ou des prolonges de berceau, il est connu, en particulier du document KR 10-1680825 B1, de rapporter sur ses deux platines d'interface des organes de pré-maintien saillant longitudinalement à l'arrière de ces platines et destinés à s'insérer dans des orifices correspondants ménagés sur les platines d'interface des brancards ou des prolonges de berceau.

Les réglementations imposées aux véhicules variant en fonction des pays ou régions, les caractéristiques mécaniques des renforts de pare-chocs sont donc différentes suivant la zone géographique dans laquelle le véhicule doit être commercialisé.

L'aspect visuel de ces renforts de pare-chocs demeurant proche quelle que soit la version du véhicule et leurs platines d'interfaces étant identiques, il peut arriver malencontreusement qu'une mauvaise référence de renfort de pare-chocs soit montée sur un véhicule lors de son assemblage, ce qui nécessite ensuite une reprise en bord de ligne de montage ou une intervention en après-vente.

Afin d'éviter ces erreurs de montage, une solution consiste à faire varier l'écartement transversal entre les organes de pré-maintien saillant longitudinalement à l'arrière de ces platines en fonction de la région de destination du renfort de pare-chocs.

La mise en oeuvre d'une telle solution s'avère cependant coûteuse car elle nécessite d'utiliser plusieurs références différentes de platines d'interfaces, ce qui entraine d'un point de vue logistique des frais de gestion et de stockage supplémentaires. Le document CN 207 309 269 U décrit une une platine d'interface permettant la fixation d'un renfort de pare-chocs sur la structure de caisse d'un véhicule conforme au préambule de la revendication 1.

### [Exposé de l'invention]

La présente invention vise donc à améliorer la situation.

Elle propose à cet effet une platine d'interface d'un renfort de pare-chocs pour véhicule automobile destinée à permettre la fixation dudit renfort de pare-chocs sur la structure de caisse dudit véhicule, ladite platine d'interface comportant les caractéristiques de la revendication 1.

La platine d'interface selon l'invention présente l'avantage de pouvoir être rapportée fixement par l'une ou l'autre des faces de sa plaque contre une extrémité d'un absorbeur latéral, de sorte à modifier le positionnement transversal de l'organe de pré-maintien.

En prévoyant des configurations de montage différentes pour les platines d'interface en fonction de la région de destination du renfort de pare-chocs, il est donc possible, tout en n'ayant recours qu'à une seule et unique référence de platine d'interface, de faire varier l'écartement transversal entre les organes de pré-maintien de ces renforts de pare-chocs de sorte à éviter tout risque d'erreur de montage.

Selon des caractéristiques préférées de ladite platine d'interface selon l'invention :
- ledit décalage transversal est au moins égal à 10 mm ;
- ledit décalage transversal est compris entre 15 et 30 mm ;
- ledit organe de pré-maintien est pourvu sur son bord supérieur d'une encoche de retenue ;
- ladite platine d'interface comporte quatre dits orifices de fixation ménagés à proximité des quatre coins de ladite plaque ;
- lesdits orifices de fixation présentent une forme oblongue orientée transversalement ; et/ou
- ladite plaque présente un évidement centré sur son axe vertical médian.

L'invention vise également sous un second aspect, un renfort de pare-chocs pour véhicule automobile comportant une poutre transversale, deux absorbeurs latéraux fixés chacun par une première de leurs extrémités à une portion d'extrémité latérale correspondante de ladite poutre, ainsi que deux telles platines d'interface fixées chacune à la seconde extrémité d'un absorbeur correspondant.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective de trois quart arrière d'une première référence de renfort de pare-chocs comprenant deux platines d'interface qui ne correspondent pas à l'invention;
[Fig 2] est une vue en perspective de trois quart arrière d'une seconde référence de renfort de pare-chocs comprenant deux platines d'interface qui ne correspondent pas à l'invention agencées différemment ; et
[Fig 3] représente une vue en perspective d'une platine d'interface qui ne correspond pas à l'invention avant le pliage de sa languette de pré-maintien.

### [Description détaillée]

On définit par rapport au véhicule un repère orthogonal XYZ comprenant trois axes perpendiculaires deux à deux, à savoir :
- un axe X, définissant une direction longitudinale, horizontale, confondue avec la direction générale de déplacement du véhicule ;
- un axe Y, définissant une direction transversale, horizontale, qui avec l'axe X définit un plan XY horizontal, et
- un axe Z, définissant une direction verticale, perpendiculaire au plan XY horizontal.

Dans la description qui va suivre et par convention, les termes « avant » et « arrière » seront utilisés pour définir la position relative d'un élément par rapport à un autre selon la direction générale de déplacement du véhicule.

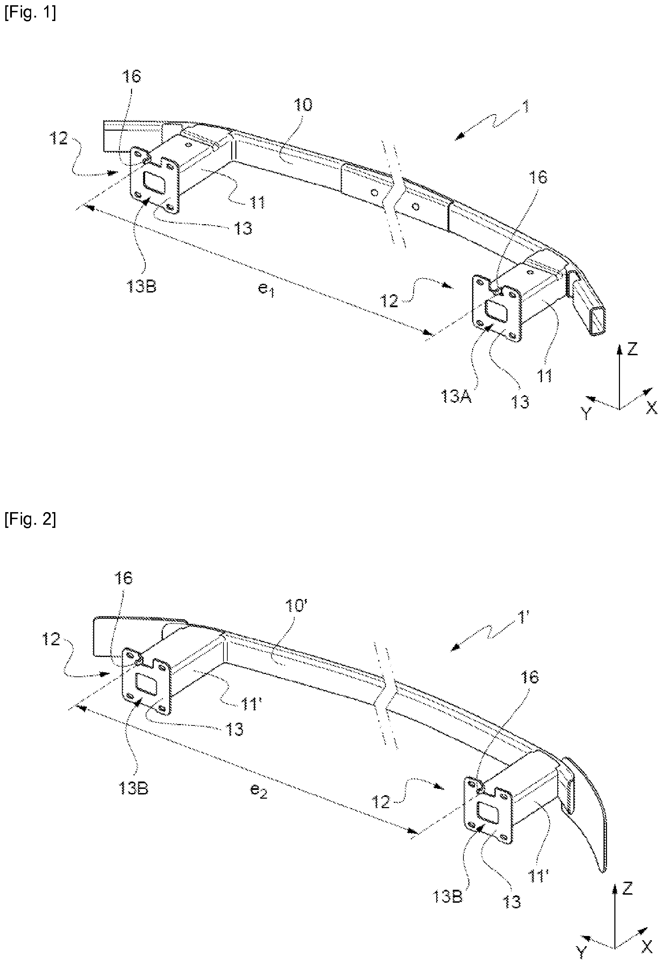

La figure 1 montre un renfort de pare-chocs avant 1 de type voie basse, prévu pour être rapporté sur les extrémités avant des prolonges latérales de berceau de la structure d'un véhicule automobile destiné à être commercialisé en Europe.

Ce renfort de pare-chocs 1 comporte une poutre métallique creuse 10 s'étendant suivant une direction sensiblement transversale, ainsi que deux absorbeurs latéraux métalliques 11 solidaires chacun d'une portion d'extrémité latérale correspondante de la poutre 10, ces absorbeurs 11 étant destinés à être fixées aux extrémités avant des deux prolonges latérales de berceau non représentées de la structure du véhicule automobile.

Obtenue classiquement par formage ou extrusion, la poutre 10 est prévue pour transmettre aux absorbeurs latéraux 11 les efforts subis lors d'un choc avec l'avant du véhicule. Elle peut comporter des plaques métalliques internes de renfort s'étendant transversalement et destinées à améliorer sa tenue mécanique.

Dotés d'une rigidité mécanique inférieure à celles de la poutre 10 et des prolonges latérales de berceau du véhicule, les deux absorbeurs latéraux (ou « crashboxes » selon la dénomination anglaise) 11 sont prévus, en cas de survenance d'un choc réparabilité, pour s'écraser et ainsi absorber l'énergie de ce choc de sorte à éviter toute détérioration de ces prolonges latérales de berceau.

Pour ce faire, ces absorbeurs latéraux 11 présentent une partie profilée allongée dans le sens longitudinal qui est agencée de sorte à se déformer par pliages successifs sous l'effet de l'effort de compression généré par le choc. Ce mode de déformation, dénommé « bottelage » (ou « progressive folding » en anglais), est le résultat d'un ensemble de micro-instabilités qui entraînent la flexion locale de la paroi de la partie profilée, laquelle se déforme plastiquement en faisant apparaître des lobes régulièrement répartis.

Avantageusement, les absorbeurs latéraux 11 sont réalisés en alliage d'aluminium et leur section est conçue de telle sorte que le bottelage puisse se produire sur toute leur longueur utile afin d'absorber la majeure partie de l'énergie cinétique du choc.

Tel qu'illustré sur la figure 1, le renfort de pare-chocs 1 comporte également deux platines d'interface 12 fixées rigidement chacune à l'extrémité arrière d'un absorbeur latéral respectif 11 (par exemple via une pluralité de cordons de soudure) et prévues pour coopérer avec deux autres platines d'interface correspondantes fixées aux extrémités avant des deux prolonges latérales de berceau de la structure du véhicule automobile.

La figure 2 montre un renfort de pare-chocs avant 1' de type voie basse, prévu pour être rapporté sur les extrémités avant des prolonges latérales de berceau de la structure d'un véhicule automobile destiné à être commercialisé en Amérique du Nord.

Présentant une architecture semblable à celle du renfort de pare-chocs 1 décrit précédemment, le renfort de pare-chocs 1' comporte ainsi également une poutre métallique creuse 10' s'étendant transversalement, deux absorbeurs latéraux métalliques 11' solidaires chacun d'une portion d'extrémité latérale correspondante de la poutre 10', et deux platines d'interface 12 fixées rigidement chacune à l'extrémité arrière d'un absorbeur latéral respectif 11'.

La poutre 10' et les absorbeurs 11' présentent toutefois des caractéristiques mécaniques différentes de celles de la poutre 10 et des absorbeurs 11 du renfort de pare-chocs 1.

Les platines d'interface 12 des deux renforts de pare-chocs 1 et 1' sont constituées chacune par une plaque métallique 13 se présentant sous la forme générale d'un rectangle dont les quatre coins sont arrondis.

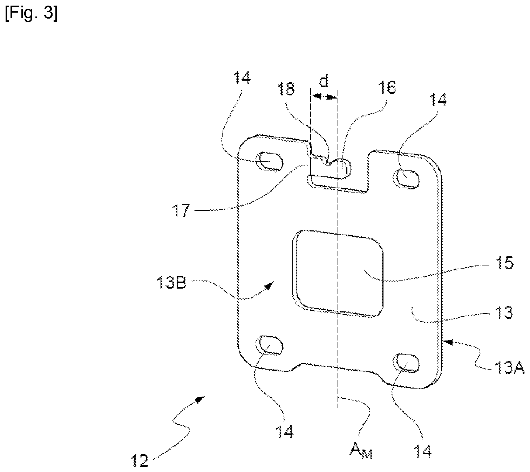

Représentée seule sur la figure 3, cette plaque métallique 13 présente quatre orifices 14 ménagés à proximité de ses quatre coins et destinés à permettre la fixation par boulonnage de la platine d'interface 12 sur une platine d'interface correspondante (non représentée) fixées rigidement à l'extrémité avant d'une prolonge latérale de berceau de la structure du véhicule automobile.

Tel qu'on peut le remarquer sur cette figure 3, les orifices de fixation 14 sont agencés symétriquement deux à deux vis-à-vis de l'axe vertical médian A_{M} de la plaque 13, de sorte que chaque platine 12 puisse être fixée par l'une au l'autre des faces 13A, 13B de sa plaque 13 contre l'extrémité arrière d'un absorbeur 11 (ou 11') sans modifier le positionnement de ces orifices de fixation 14 dans le repère du renfort de pare-chocs 1 (ou 1').

Ces orifices de fixation 14 présentent en outre de préférence une forme oblongue orientée transversalement de sorte à compenser les dispersions dimensionnelles que l'on peut retrouver entre les deux absorbeurs latéraux 11 (ou 11') du renfort de pare-chocs 1 (ou 1') et/ou entre les deux prolonges latérales de berceau du fait des tolérances normales de fabrication.

Afin de réduire la masse de la platine d'interface 12, la plaque métallique 13 présente de manière avantageuse un évidement 15 (ici, de forme rectangulaire) centré sur son axe vertical médian A_{M}.

La plaque métallique 13 comporte également une languette de pré-maintien 16 réalisée par découpe dans sa partie supérieure et étant raccordée au reste de cette plaque par l'intermédiaire d'une ligne de pliage verticale 17 écartée transversalement d'un décalage prédéfini d vis-à-vis de l'axe vertical médian A_{M}.

Cette languette de pré-maintien 16 est destinée à être pliée à 90° par rapport au plan moyen de la plaque 13 après sa fixation sur l'extrémité arrière d'un absorbeur 11, 11', de sorte à saillir longitudinalement à l'arrière de cette plaque 13.

Suivant la face de la plaque 13 rapportée fixement contre l'extrémité arrière d'un absorbeur 11, 11', le sens du pliage va donc varier de sorte que la languette 16 saille de la première face 13A ou de la seconde face opposée 13B de la plaque 13 selon un axe longitudinal écarté transversalement du décalage d vis-à-vis de l'axe vertical médian A_{M} de cette plaque 13.

Plus précisément et dans le cas du renfort de pare-chocs 1 représenté sur la figure 1 :
- la platine d'interface 12 située du côté gauche est rapportée fixement par la face 13A de sa plaque 13 contre l'extrémité arrière de l'absorbeur gauche 11, tandis que sa languette 16 est pliée de sorte à saillir longitudinalement vers l'arrière de la face opposée 13B de cette plaque 13 ; et
- la platine d'interface 12 située du côté droit est rapportée fixement par la face 13B de sa plaque 13 contre l'extrémité arrière de l'absorbeur droit 11, tandis que sa languette 16 est pliée de sorte à saillir longitudinalement vers l'arrière de la face opposée 13A de cette plaque 13.

Dans le cas du renfort de pare-chocs 1' représenté sur la figure 2 :
- la platine d'interface 12 située du côté gauche est rapportée fixement par la face 13A de sa plaque 13 contre l'extrémité arrière de l'absorbeur gauche 11', tandis que sa languette 16 est pliée de sorte à saillir longitudinalement vers l'arrière de la face opposée 13B de cette plaque 13 ; et
- la platine d'interface 12 située du côté droit est également rapportée fixement par la face 13A de sa plaque 13 contre l'extrémité arrière de l'absorbeur droit 11', tandis que sa languette 16 est pliée de sorte à saillir longitudinalement vers l'arrière de la face opposée 13B de cette plaque 13.

Cet agencement différent des deux platines 12 sur le renfort de pare-chocs 1 par rapport à celui des deux platines 12 du renfort de pare-chocs 1' permet ainsi d'obtenir des écartements transversaux e₁ et e₂ différents entre les languettes de pré-maintien 16 du renfort de pare-chocs 1 et celles du renfort de pare-chocs 1', de sorte à empêcher tout risque de montage d'une mauvaise référence de renfort de pare-chocs sur un véhicule.

On notera également qu'un troisième agencement des deux platines d'interface 12 est également possible de sorte à obtenir un troisième écartement transversal entre les languettes de pré-maintien 16 correspondant à une autre référence de renfort de pare-chocs (cet agencement consistant à rapporter les deux platines d'interface par la face 13A de leur plaque 13 contre l'extrémité arrière d'un absorbeur correspondant, tandis que leur languette 16 est pliée de sorte à saillir longitudinalement vers l'arrière de la face opposée 13B de la plaque 13).

Lors du montage du renfort de pare-chocs 1 (ou 1'), les deux languettes 16 des platines d'interface 12 sont destinées à venir s'insérer dans des fenêtres de réception correspondantes ménagées dans les platines d'interface fixées aux extrémités avant des deux prolonges latérales de berceau, de sorte à assurer un pré-maintien du renfort de pare-chocs avant sa fixation définitive par boulonnage.

Afin d'éviter tout risque d'insertion des languettes 16 d'une mauvaise référence de renfort de pare-chocs au travers des fenêtres de réception du fait des tolérances de fabrication pouvant entrainer certaines dispersions dimensionnelles dans la chaîne de côtes des deux prolonges latérales de berceau, le décalage transversal d est avantageusement au moins égal à 10 millimètres et compris de préférence entre 15 et 30 millimètres.

Tel qu'illustré sur la figure 3, la languette 16 est pourvue sur son bord supérieur d'une encoche 18 prévue pour venir s'insérer dans le bord supérieur d'une fenêtre de réception respective afin d'assurer la retenue en position du renfort de pare-chocs 1 (ou 1') avant sa fixation définitive.

La présence des encoches 18 permet en effet de limiter le glissement des languettes 16 le long du bord supérieur des fenêtres de réception, causé par le poids du renfort de pare-chocs 1 (ou 1') et qui pourrait sinon entrainer le retrait de ces languettes 16 des fenêtres de réception et la chute de ce renfort de pare-chocs.

Conformément à l'invention, la languette de pré-maintien est remplacée par un pion fixé rigidement à la plaque qu'il traverse de part en part suivant un axe longitudinal écarté transversalement du décalage prédéfini vis-à-vis de son axe vertical médian, de sorte à saillir d'une face et de l'autre de cette plaque.

Dans le cadre de l'invention, on peut prévoir avantageusement que les deux portions du pion saillant respectivement d'une face et de l'autre de la plaque soient également pourvues chacune d'une encoche de retenue ménagée sur leur bord supérieur.

Selon d'autres variantes de réalisation non représentées, les platines d'interfaces selon l'invention peuvent être montées sur des renforts de pare-chocs avant de type voie haute prévus pour être rapportés sur les extrémités avant des brancards avant de la structure d'un véhicule automobile.

Selon d'autres variantes de réalisation non représentées, les platines d'interfaces selon l'invention peuvent être montées également sur des renforts de pare-chocs arrière prévus pour être rapportés sur le panneau délimitant une zone arrière de coffre du véhicule automobile.

## Revendications

1. Platine d'interface (12) d'un renfort de pare-chocs (1 ; 1') pour véhicule automobile destinée à permettre la fixation dudit renfort de pare-chocs (1 ; 1') sur la structure de caisse dudit véhicule,
ladite platine d'interface (12) comportant :
- une plaque de forme rectangulaire (13) présentant une pluralité d'orifices (14) aptes à permettre sa fixation par boulonnage à un élément d'interface correspondant de ladite structure de caisse du véhicule, et
- un organe de pré-maintien (16) solidaire de ladite plaque (13) et destiné à s'insérer dans une fenêtre de réception correspondante ménagée dans ledit élément d'interface de sorte à assurer un pré-maintien dudit renfort de pare-chocs (1 ; 1') avant sa fixation par boulonnage sur ladite structure de caisse ;
lesdits orifices de fixation (14) étant agencés symétriquement deux à deux vis-à-vis de l'axe vertical médian (A_{M}) de ladite plaque (13), et ledit organe de pré-maintien (16) étant apte à saillir d'une face (13A) ou/et de l'autre (13B) de ladite plaque (13) selon un axe longitudinal écarté transversalement d'un décalage prédéfini (d) vis-à-vis dudit axe vertical médian (A_{M}), **caractérisée en ce que** ledit organe de pré-maintien est constitué par un pion traversant ladite plaque suivant un axe longitudinal décalé transversalement selon ledit décalage prédéfini vis-à-vis dudit axe vertical médian, de sorte à saillir d'une face et de l'autre de cette plaque.

2. Platine d'interface selon la revendication 1, **caractérisée en ce que** ledit décalage transversal (d) est au moins égal à 10 mm.

3. Platine d'interface selon la revendication 2, **caractérisée en ce que** ledit décalage transversal (d) est compris entre 15 et 30 mm.

4. Platine d'interface selon l'une des revendications 1 à 5, **caractérisée en ce que** ledit organe de pré-maintien (16) est pourvu sur son bord supérieur d'une encoche de retenue (18).

5. Platine d'interface selon l'une des revendications 1 à 4, **caractérisée en ce qu'**elle comporte quatre dits orifices de fixation (14) ménagés à proximité des quatre coins de ladite plaque (13).

6. Platine d'interface selon l'une des revendications 1 à 5, **caractérisée en ce que** lesdits orifices de fixation (14) présentent une forme oblongue orientée transversalement.

7. Platine d'interface selon l'une des revendications 1 à 6, **caractérisée en ce que** ladite plaque (13) présente un évidement (15) centré sur son axe vertical médian (A_{M}).

8. Renfort de pare-chocs (1 ; 1') pour véhicule automobile comportant une poutre transversale (10 ; 10'), deux absorbeurs latéraux (11 ; 11') fixés chacun par une première de leurs extrémités à une portion d'extrémité latérale correspondante de ladite poutre (10 ; 10'), ainsi que deux platines d'interface (12) fixées chacune à la seconde extrémité d'un absorbeur correspondant 11 ; 11') ;
**caractérisé en ce que** lesdites platines d'interfaces (12) sont conformes à l'une des revendications 1 à 7. 1

## Patentansprüche

1. Schnittstellenplatine (12) einer Stoßfängerverstärkung (1; 1') für ein Kraftfahrzeug zur Befestigung der Stoßfängerverstärkung (1; 1') auf der Aufbaustruktur des Fahrzeugs,
die Schnittstellenplatine (12) umfasst:
- eine rechteckige Platte (13) mit einer Vielzahl von Öffnungen (14), die ihre Befestigung durch Schrauben an einem entsprechenden Schnittstellenelement der Fahrzeugkarosserie ermöglichen, und
- ein mit der Platte (13) fest verbundenes Vorhalteelement (16) zum Einsetzen in ein entsprechendes Aufnahmefenster, das in dem Schnittstellenelement vorgesehen ist, um eine Vorhaltung der Stoßfängerverstärkung (1; 1') zu gewährleisten vor seiner Befestigung durch Schrauben an der Aufbaustruktur;
Die Befestigungsöffnungen (14) sind symmetrisch zu zwei bis zwei Seiten bezüglich der vertikalen Mittelachse (A_{M}) der Platte (13) angeordnet, und das Vorhalteelement (16) ist in der Lage, um von einer Seite (13A) oder/und der anderen Seite (13B) der Platte (13) um eine quer von Vorbestimmter Versatz (d) zur vertikalen Mittelachse (A_{M}), **dadurch gekennzeichnet, dass** das Vorhalteelement aus einem Zapfen besteht, der die Platte entlang einer Längsachse durchquert, die in Querrichtung in Bezug auf die vorbestimmte vertikale Mittelachse versetzt ist, sodass er von einer Seite der Platte und der anderen Seite vorsteht.

2. Schnittstellenplatine nach Anspruch 1, **dadurch gekennzeichnet, dass** der Querversatz (d) mindestens 10 mm beträgt.

3. Schnittstellenplatine nach Anspruch 2, **dadurch gekennzeichnet, dass** der Querversatz (d) zwischen 15 und 30 mm liegt.

4. Schnittstellenplatine nach einem der Ansprüche 1 bis 5, **dadurch gekennzeichnet, dass** das Vorhalteelement (16) an seinem oberen Rand mit einer Haltekerbe (18) versehen ist.

5. Schnittstellenplatine nach einem der Ansprüche 1 bis 4, **dadurch gekennzeichnet, dass** sie vier Befestigungsöffnungen (14) aufweist, die in der Nähe der vier Ecken der Platte (13) ausgebildet sind.

6. Schnittstellenplatine nach einem der Ansprüche 1 bis 5, **dadurch gekennzeichnet, dass** die Befestigungsöffnungen (14) eine quer verlaufende längliche Form aufweisen.

7. Schnittstellenplatine nach einem der Ansprüche 1 bis 6, **dadurch gekennzeichnet, dass** die Platte (13) eine Ausnehmung (15) aufweist, die auf ihrer vertikalen Mittelachse (A_{M}) zentriert ist.

8. Stoßfängerverstärkung (1; 1') für ein Kraftfahrzeug mit einem Querträger (10; 10'), zwei seitliche Absorber (11; 11'), die jeweils mit einem ersten ihrer Enden an einem entsprechenden seitlichen Endabschnitt des Trägers (10) befestigt sind; 10') sowie zwei Schnittstellenplatinen (12), die jeweils am zweiten Ende eines entsprechenden Absorbers befestigt sind 11; 11') ;
**Dadurch gekennzeichnet, dass** die Schnittstellenplatinen (12) einem der Ansprüche 1 bis 7 entsprechen.

## Claims

1. Interface plate (12) of a bumper reinforcement (1; 1') for motor vehicles intended to allow the fixing of such bumper reinforcement (1; 1') on the body structure of the vehicle,
said interface plate (12) containing:
- a rectangular plate (13) having a plurality of holes (14) capable of fastening to a corresponding interface element of the vehicle body structure by bolting, and
- a pre-maintenance device (16) which is attached to the said plate (13) and which is intended to be inserted into a corresponding reception window in the said interface element so as to ensure a pre-maintenance of the said bumper reinforcement (1); 1') before it is fastened by bolting on the said body structure;
those fixing holes (14) being arranged symmetrically between two and two opposite the center vertical axis (A_{M}) of the said plate (13), and the said pre-maintenance device (16) being capable of lifting one face (13A) or/and the other (13B) of the said plate (13) on a transverse longitudinal axis separated from a predefined offset (d) in relation to the said median vertical axis (A_{M}), **characterized by** the said pre-maintenance organ being a pawn crossing the said plate following a longitudinal axis offset horizontally in accordance with the said predefined offset in relation to the said median vertical axis, so as to protrude on both sides of that plate.

2. Interface plate according to Claim 1, characterized as the said transverse offset (d) is at least 10 mm.

3. Interface plate according to Claim 2, characterized as the said transverse offset (d) is between 15 and 30 mm.

4. Interface plate according to one of the claims 1 to 5, **characterized by** the fact that the said pre-maintenance organ (16) is equipped on its upper edge with a restraint notch (18).

5. Interface plate according to one of claims 1 to 4, **characterized by** having four so-called fixing holes (14) located near the four corners of the said plate (13).

6. An interface plate according to one of the claims 1 to 5, **characterized by** the fact that the said fixing holes (14) have an oblong shape oriented transverse.

7. Interface plate according to one of the claims 1 to 6, **characterized by** the fact that the said plate (13) shows a stacking (15) centered on its median vertical axis (A_{M}).

8. Bumper reinforcement (1; 1') for motor vehicles with a transverse beam (10; 10'), two side absorbers (11; 11') each fixed by a first of their ends to a corresponding portion of the lateral end of the beam (10; 10'), and two interface plates (12), each attached to the second end of a corresponding absorber 11; 11');
characterized as the said interface plates (12) comply with one of the claims 1 to 7.
